# EUROPÄISCHE PATENTANMELDUNG

(11) **EP 3 168 085 A1**
(43) Veröffentlichungstag der Anmeldung: **17.05.2017**
(21) Anmeldenummer: 16198268.1
(22) Anmeldetag: 10.11.2016
(51) Int. Cl.: B60R 13/04, B60J 10/265

(54) **ÜBERBRÜCKUNGSBAUTEIL UND BORDKANTENZIERLEISTE SOWIE SYSTEM HIERAUS**

(30) Priorität: 16.11.2015 DE 102015119783
(71) Anmelder: DURA Automotive Holdings U.K., Ltd., Birmingham, West Midlands B35 7AG (GB)
(72) Erfinder: Schulte, Frank, 58802 Balve (DE); Iffland, Dennis, 58840 Plettenberg (DE); Winkhaus, Kai, 58849 Herscheid (DE); Stein-Hörich, Margit, 57368 Lennestadt (DE)
(74) Vertreter: Bungartz Christophersen Partnerschaft mbB Patentanwälte

(57) **Zusammenfassung**

Bei einem System aus einer Bordkantenzierleiste und einem Überbrückungsbauteil zur insbesondere optischen Überbrückung eines Bauteilübergangs zwischen der Bordkantenzierleiste und dem Überbrückungsbauteil soll bei möglichst einfacher Fertigung und konstruktiv einfacher Gestaltung der Bordkantenzierleiste eine einfache und sichere Verbindung der Bordkantenzierleiste und des Überbrückungsbauteils ermöglicht werden.

Hierzu ist vorgesehen, dass die Fixierung des Überbrückungsbauteils an der Bordkantenzierleiste nur über einen an der Bordkantenleiste vorgesehenen, einen Hinterschnitt ausbildenden Befestigungsschenkel erfolgt und der Befestigungsschenkel der einzige der Befestigung des Überbrückungsbauteils dienende Schenkel des Querschnittsprofils der Bordkantenzierleiste ist. Das Überbrückungsbauteil weist hierzu ein Rastmittel in Form einer Rastnut auf, die den mit dem Hinterschnitt versehenen Befestigungsschenkel oberseitig und unterseitig verrastend zu umgreifen vermag.

## Beschreibung

Die Erfindung betrifft ein Überbrückungsbauteil, das zur insbesondere optischen Überbrückung eines Bauteilübergangs von einer den Fensterschacht einer Fahrzeugtür eines Automobils abschließenden Bordkantenzierleiste zu einem hieran angrenzenden Nachbarbauteil eingerichtet ist. Die Erfindung betrifft ferner eine derartige Bordkantenzierleiste als auch ein System aus einer Bordkantenzierleiste und einem Überbrückungsbauteil.

Bei Automobilen, insbesondere bei Personenkraftwagen (PKW), werden die Oberkanten der Fensterschächte, in die hinein die Fensterscheiben bei deren Herablassen eintauchen, mit Bordkantenzierleisten versehen, die den jeweiligen Fensterschacht als Zierleisten nach außen hin optisch abschließen. Auf diese Weise erzeugen die Bordkantenzierleisten einen optisch ansprechenden Abschluss des Fensterschachts und prägen durch ihre sich in der Regel von der Karosserie abhebende Farb- und/oder Oberflächengestaltung, z.B. als Chrom-, Aluminium- oder Edelstahlleisten (jeweils lackiert, poliert, matt gebürstet, etc.), in nicht unmaßgeblicher Weise das äußere Erscheinungsbild des Fahrzeugs. Bordkantenzierleisten wirken über die Länge des Fensterschachts hinweg meist mit Kedern oder Dichtungen zusammen, um an der Fahrzeugkarosserie gehalten zu werden. Sie bilden zusammen mit den der eigentlichen Befestigung am Fahrzeug dienenden Kedern oder Dichtungen Schachtabdeck- bzw. Schachtabschlussleisten. Bordkantenzierleisten werden auch als Bordkantenzierstäbe bezeichnet.

Neben einer derartigen Bordkantenzierleiste weisen Fahrzeugtüren in vielen Fällen auch (Fenster-)Rahmenleisten auf, die bezüglich ihrer Material- und/oder Oberflächenbeschaffenheit nicht selten der Bordkantenzierleiste entsprechen und somit zusammen mit der Borkantenleiste einen die Scheibe ringsum umgebenden Rahmen ausbilden. Gleichwohl stoßen Bordkantenzierleiste und Rahmenleiste an Übergängen von einem Bauteil zum anderen aneinander.

Im Bereich des Bauteilübergangs zwischen Rahmenleiste und Bordkantenzierleiste (im dem Bereich, in dem der stirnseitige Endabschnitt der Rahmenleiste mit einem Endabschnitt der Borkantenleiste aneinander stößt) wird die Bordkantenzierleiste beschnitten bzw. befräst, um ihr eine dem stirnseitigen Endabschnitt der Rahmenleiste angepasste Kontur zu geben. Hierdurch soll gewährleistet werden, dass die Rahmenleiste und die Bordkantenzierleiste optisch möglichst fließend und unauffällig, insbesondere ohne Bildung eines zu auffälligen Spaltes, ineinander übergehen. Trotz eines solchen Beschnitts bzw. einer solchen Befräsung ist das Entstehen einer Schattenfuge am Spalt letztlich nicht zu vermeiden. Zur Stabilisierung des Spaltbildes und auch zur Arretierung bzw. definierten Ausrichtung beider Bauteile aneinander kann ein Überbrückungsbauteil Verwendung finden.

Aus dem Stand der Technik sind Bordkantenzierleisten mit einsetzbaren Endkappen bekannt. Eine Endkappe kann bei entsprechender konstruktiver Gestaltung auch als Überbrückungsbauteil ausgebildet sein bzw. ein Überbrückungsbauteil kann bei entsprechender konstruktiver Gestaltung auch die Funktion einer Endkappe übernehmen. Derartige Endkappen bilden, wenn bestimmungsgemäß mit der Bordkantenzierleiste verrastet, eine die Bordkantenzierleiste stirnseitig optisch abschließende Abschlussfläche aus. Endkappen werden vornehmlich in axialer Richtung, also parallel zur (Längs-)Erstreckungsrichtung einer Bordkantenzierleiste, in den endseitig offenen Querschnitt der Bordkantenzierleiste eingeschoben und verrasten mit der Bordkantenzierleiste bei Erreichen ihrer bestimmungsgemäßen Endeinbaulage. Der endseitig offene Profilquerschnitt der Bordkantenzierleiste bildet typischerweise Hinterschnitte aus, die mit korrespondierenden, an der Endkappe vorgesehenen Rastmitteln zusammenwirken, so dass die Endkappe in der Endeinbaulage auch quer zur axialen Erstreckungsrichtung an der Bordkantenleiste fixiert ist. Das axiale Einschieben einer Endkappe in die Bordkantenzierleiste ist aber problematisch oder gar ausgeschlossen, wenn die stirnseitige Abschlussfläche der Bordkantenzierleiste durch Umlegen eines Materialbereichs der Zierleistenenden erreicht werden soll, so dass kein endseitig offener Profilquerschnitt, in den eine Endkappe in axialer Richtung eingeschoben werden könnte, besteht. In derartigen Fällen muss eine Endkappe in einer quer zur Längserstreckungsrichtung der Bordkantenzierleiste ausgerichteten Bewegung mit dieser verrastet werden. Auch in diesem Fall weist die Bordkantenzierleiste Hinterschnitte auf, die mit Rastmitteln der Endkappe bzw. des Überbrückungsbauteils zusammenwirken.

Wird die Borkantenzierleiste im für eine Endkappe bzw. ein Überbrückungsbauteil relevanten Bereich zwecks Anpassung an die angrenzende Kontur der Rahmenleiste beschnitten bzw. befräst, fallen infolge des Beschnitts bzw. des Befräsens Abschnitte des Profilquerschnitts der Bordkantenzierleiste, insbesondere Profilschenkel, weg, die für die Fixierung einer Endkappe oder eines Überbrückungsbauteils benötigt oder sich zumindest hierfür eignen würden. Daher werden Profilquerschnitte der typischerweise stranggepressten Bordkantenzierleiste mit einem Mittelsteg versehen, der ausschließlich im Endabschnitt zur Verrastung des Überbrückungsbauteils dient und derart positioniert ist, dass er bei dem Beschnitt des Endabschnitts der Bordkantenzierleiste nicht wegfällt, gleichwohl aber die Verbindung bzw. Verrastung von Überbrückungsbauteil und Bordkantenzierleiste gewährleistet. Das Vorsehen eines solchen Mittelstegs bedeutet aber wiederrum, dass dieser insbesondere im Bereich der Stirnseite der Bordkantenzierleiste (dem äußeren Ende der Bordkantenzierleiste), in dem ein Materialbereich zur Bildung einer stirnseitigen, axialen Abschlussfläche umgelegt werden soll, vor dem Umlegen des Materialbereichs entfernt werden muss. Dies führt nicht nur zu zusätzlichem Aufwand sondern kann auch mit einer unerwünschten, nachteiligen Beeinflussung der Bauteiloberfläche einhergehen.

Hinzu kommt, dass bei Vorsehen eines derartigen Mittelstegs die Gefahr besteht, dass sich dieser auf der äußeren Zierflächenseite der Bordkantenzierleiste abzeichnen kann.

Außer bei einer (Fenster-)Rahmenleiste können die vorstehend beschriebenen Sachverhalte auch bei anderen Zier- oder Rahmenleisten auftreten (beispielsweise Säulenblenden). Sofern im Rahmen dieser Anmeldung Rahmenleisten erwähnt sind, beschränkt sich dieser Begriff nicht auf Fensterrahmenleisten sondern erstreckt sich allgemein auf Zierleisten, Säulenblenden oder sonstige (Leisten-)Bauteile, die als zu einer Bordkantenzierleiste benachbarte Bauteile einen Bauteilübergang zwischen den beiden aneinander angrenzenden Bauteilen erfordern.

Aufgabe der Erfindung ist es daher, ein System aus einer Bordkantenzierleiste und einem Überbrückungsbauteil zur Verfügung zu stellen, das bei möglichst einfacher Fertigung und konstruktiv einfacher Gestaltung der Bordkantenzierleiste eine einfache und sichere Verbindung beider Bauteile ermöglicht.

Bei einer Bordkantenzierleiste zur Anbringung an die Bordkante einer Fahrzeugtür eines Personenkraftwagens, die in einem Endabschnitt, an dem bei bestimmungsgemäßer Montage der Bordkantenzierleiste am Kraftfahrzeug ein Bauteilübergang zu einer angrenzenden Rahmenleiste realisiert ist, zur Annäherung an die Kontur der angrenzenden Rahmenleiste beschnitten ist, und die im Endabschnitt ein Querschnittsprofil mit einem Basisschenkel aufweist, der bei bestimmungsgemäßer Montage der Borkantenzierleiste am Fahrzeug eine äußere Zierfläche mit einer die Zierfläche begrenzenden unteren Sichtkante bildet, und bei der ausgehend vom Basisschenkel ein bei bestimmungsgemäßer Anordnung der Bordkantenzierleiste am Kraftfahrzeug ein nach innen weisender Befestigungsschenkel zur Fixierung eines Überbrückungsbauteils an der Bordkantenzierleiste vorgesehen ist, ist zur Lösung der Aufgabe vorgesehen, dass der Befestigungsschenkel im Bereich des beschnittenen Endabschnitts der Bordkantenzierleiste der einzige der Befestigung des Überbrückungsbauteils dienende Schenkel des Querschnittsprofils ist. Zusätzlich zu dem Befestigungsschenkel weist die Bordkantenzierleiste demnach keinen weiteren Schenkel oder Steg auf, mit dem das Übergangsbauteil zwecks Arretierung an der Bordkantenzierleiste zusammenwirkt.

Das Überbrückungsteil zur insbesondere optischen Überbrückung eines sich bei bestimmungsgemäßer Montage an einem Kraftfahrzeug zwischen einer Bordkantenzierleiste und einer Fensterrahmenleiste bildenden Bauteilübergangs weist einen Querschnitt mit einem Rastmittel auf, das eingerichtet ist, bei bestimmungsgemäßer Anordnung an der Bordkantenzierleiste einen an einem Befestigungsschenkel der Bordkantenzierleiste befindlichen Hinterschnitt zu hintergreifen. Zur Lösung der Aufgabe ist vorgesehen, dass das Rastmittel von einer Rastnut gebildet ist, die den mit dem Hinterschnitt versehenen Befestigungsschenkel oberseitig und unterseitig verrastend übergreift.

Bordkantenzierleiste und Überbrückungsbauteil wirken dabei in einem System zusammen, bei dem die Fixierung des Überbrückungsbauteils an der Bordkantenzierleiste nur an dem einen Befestigungsschenkel erfolgt.

Das Überbrückungsbauteil wird demnach ausschließlich über die von der Rastnut und dem Befestigungsschenkel gebildete Rastverbindung an der Bordkantenzierleiste gehalten. Ein zusätzlicher sich vom Basisschenkel aus einwärts erstreckender Mittelsteg, d.h. ein Mittelsteg, der sich von der bei bestimmungsgemäßer Anbringung der Bordkantenzierleiste am Fahrzeug von der dem Fahrzeug zugewandten inneren Oberfläche des Basisschenkels ausgehend in Richtung auf die Fahrzeugkarosserie hin erstreckt, ist demnach nicht erforderlich.

Der Befestigungsschenkel erstreckt sich bevorzugt in einem Winkel α kleiner 90°, bevorzugt in einem Winkel α kleiner 45°, zum Basisschenkel von der unteren Sichtkante des Basisschenkels ausgehend nach innen. Der Befestigungsschenkel und der Basisschenkel treffen sich demnach bevorzugt im Bereich einer die untere Sichtkante der Bordkantenzierleiste bildenden Unterkante des Querschnittprofils der Bordkantenzierleiste und bilden zwischen sich einen spitzen Winkel.

Im Bereich seines vom Basisschenkel wegweisenden Endes bildet der Befestigungsschenkel einen Hinterschnitt aus, um einen quer zur Längserstreckungsrichtung der Bordkantenzierleiste wirksamen und von dem Überbrückungsbauteil umgreifbares Rastglied auszubilden. Der Hinterschnitt ist dabei bevorzugt von einer Verdickung, einer Abknickung oder einer Rastnase gebildet.

Zwecks eines verrastend wirkenden Umgreifens des Hinterschnitts kann vorteilhaft vorgesehen sein, dass die Rastnut des Überbrückungsbauteils vorzugsweise im Bereich des Nutgrunds eine Aufweitung zur Aufnahme des sich am Befestigungsschenkel befindlichen Rastglieds aufweist, wobei die Form der Aufweitung an die Form des Rastglieds angepasst ist.

Damit das Überbrückungsbauteil zuverlässig an der Bordkantenzierleiste gehalten ist, insbesondere mit diesem wirksame verrasten kann, weist die die Rastnut einen oberen Nutenschenkel und einen unteren Nutenschenkel auf. Bevorzugt bildet wenigstens der beiden Nutenschenkel (vorzugsweise der obere Nutenschenkel) an seinem dem Nutgrund abgewandten Ende eine den Hinterschnitt des Befestigungsschenkels übergreifende Einengung, im Bereich derer die Nutenbreite der Rastnut reduziert ist und die sich beim Aufsetzen auf den Befestigungsschenkel zunächst aufweitet. Weiter bevorzugt bildet einer der beiden Nutenschenkel (vorzugsweise der untere Nutenschenkel) ein Gegenlager für den den Hinterschnitt des Befestigungsschenkels übergreifenden anderen Nutenschenkel (vorzugsweise der obere Nutenschenkel).

Dabei überragt ein Nutenschenkel (bevorzugt der untere, das Gegenlager ausbildende Nutenschenkel) den anderen Nutenschenkel (bevorzugt der obere, die Einengung ausbildende Nutenschenkel) in einer Hauptwirkrichtung der Verrastung zwischen Bordkantenzierleiste und Überbrückungsbauteil gesehen.

Über ihre Gesamtlänge gesehen weist die Bordkantenzierleiste einen Mittelabschnitt und an einem Ende oder an beiden Enden einen beschnittenen Endabschnitt auf. Dabei hat die Bordkantenzierleiste im nicht beschnittenen Mittelabschnitt bevorzugt ein C-förmiges Querschnittsprofil, das neben bzw. zusätzlich zu dem bevorzugt unten angeordneten Befestigungsschenkel einen bevorzugt oben angeordneten, von einer oberen Sichtkante nach innen in einem (spitzen) Winkel abgewinkelten oberen Profilschenkel aufweist. Im Bereich des für das Überbrückungsbauteil relevanten Endabschnitts ist der obere Profilschenkel infolge dessen Beschnitts hingegen weggefallen.

Die Bordkantenzierleiste und das Überbrückungsbauteil sind bevorzugt derart aufeinander abgestimmt, dass die Hauptwirkrichtung der Verrastung zwischen Überbrückungsbauteil und Bordkantenzierleiste bezogen auf das Fahrzeug und bei bestimmungsgemäßer Montage der Bordkantenzierleiste am Fahrzeug in yz-Richtung ausgerichtet ist. Yz-Richtung bedeutet eine Richtung, die sowohl Richtungsanteile in y-Richtung als auch solche in z-Richtung aufweist, wobei die beiden Richtungsanteile dem Betrag nach nicht die gleiche Größe aufweisen müssen.

Insbesondere wenn vorgesehen ist, dass ein Materialbereich der Borkantenzierleiste am stirnseitigen Ende der Bordkantenzierleiste zur Erzeugung einer stirnseitigen Abschlussfläche umgelegt ist, ist es von Vorteil, wenn das Überbrückungsbauteil derart ausgebildet ist, dass es quer zur Längserstreckung der Bordkantenzierleiste auf diese aufzusetzen ist, insbesondere also in yz-Richtung bezogen auf das Fahrzeug bei bestimmungsgemäßer Anordnung der Bordkantenzierleiste am Fahrzeug (in Richtung der Hauptwirkrichtung der Verrastung).

Bei einem erfindungsgemäß ausgestalteten System aus Bordkantenzierleiste und Überbrückungsbauteil ist das Vorsehen eines Mittelstegs zur Befestigung des Überbrückungsbauteils an der Bordkantenzierleiste nicht erforderlich. Vielmehr kann das Überbrückungsbauteil ausschließlich über die von der Rastnut und dem Befestigungsschenkel gebildete Rastverbindung an der Bordkantenzierleiste gehalten werden. Der Wegfall eines in einem Mittelabschnitt des bevorzugt stranggepressten Profilquerschnitts der Bordkantenzierleiste noch vorhandenen Profilschenkels infolge eines Beschnitts der Bordkantenzierleiste in einem Endabschnitt ist daher unproblematisch und erfordert nicht das Vorsehen eines Mittelstegs.

Die nachfolgenden Zeichnungen und die folgende Beschreibung bevorzugter Ausführungsbeispiele verdeutlichen Merkmale und Vorteile der Erfindung.

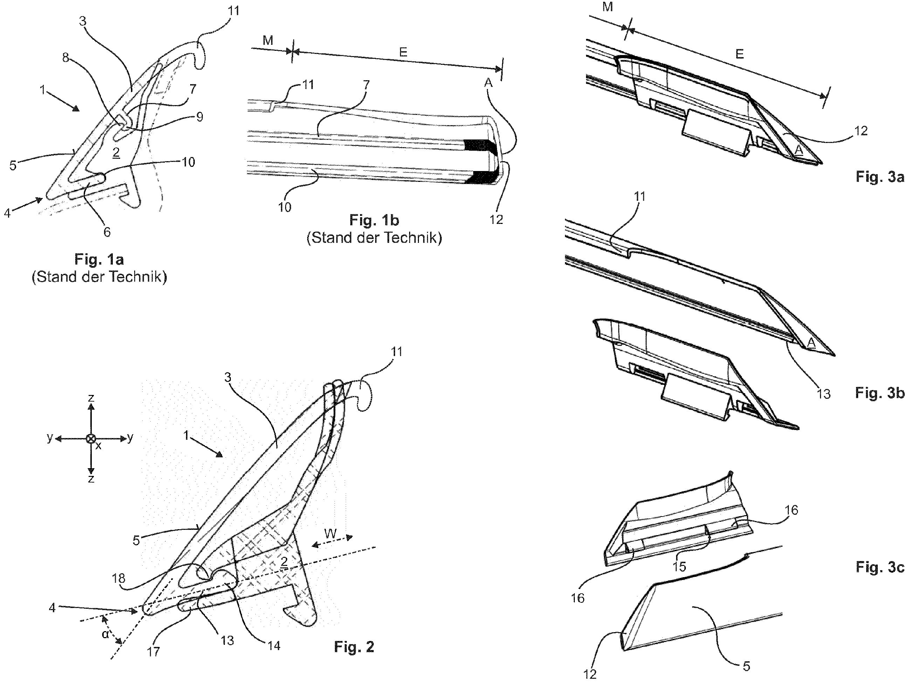

In den Zeichnungen zeigt
Fig. 1a einen Querschnitt durch eine Bordkantenzierleiste mit einem darauf aufgesetztem Überbrückungsbauteil gemäß dem Stand der Technik,
Fig. 1 b eine Rückseite eines Endabschnitts der Bordkantenzierleiste aus Fig. 1a ohne ein aufgesetztes Überbrückungsbauteil,
Fig. 2 einen Querschnitt einer Bordkantenzierleiste mit einem rückseitig darauf aufgesetzten Überbrückungsbauteil, und
Fig. 3a-3c verschiedene Ansichten eines Endabschnitts fer Bordkantenzierleiste aus Figur 2 mit aufgesetztem oder zeichnerisch von der Bordkantenzierleiste losgelöstem Überbrückungsbauteil.

In Figur 1a ist eine Bordkantenzierleiste 1 mit einem rückseitig darauf aufgesetzten Überbrückungsbauteil 2 gezeigt, wie dies aus dem Stand der Technik bekannt ist. Figur 1b zeigt einen Endabschnitt der Bordkantenzierleiste 1 in einer rückwärtigen Ansicht ohne das Überbrückungsbauteil.

Die Bordkantenzierleiste 1 besitzt einen Basisschenkel 3, der mit seiner nach außen gewandten Oberfläche eine bei bestimmungsgemäßer Montage am Kraftfahrzeug von außen sichtbare Zierfläche 5 ausbildet. Die Zierfläche ist an der unteren Seite durch eine untere Sichtkante 4 begrenzt. Ausgehend von dieser Unterkante erstreckt sich ein Hilfsschenkel 6 nach innen.

Das Überbrückungsbauteil 2 hintergreift zum einen mit einem Rastvorsprung 8 die Rastnase 9 eines sich von der Rückseite des Basisschenkels 2 nach innen erstreckenden Mittelstegs 7 und stützt sich zum anderen mit einem Auflager 10 auf dem Hilfsschenkel 6 ab. Zur Verrastung des Überbrückungsbauteils 2 an der Bordkantenzierleiste 1 wirken somit Aufnahme 10 und Rastvorsprung 8 mit Hilfsschenkel 6 und Mittelsteg 7 zusammen.

Aus Figur 1b ist ersichtlich, dass im Bereich des beschnittenen Endabschnitts E ein im Mittelabschnitt M der Bordkantenzierleiste noch existierender oberer Profilschenkel 11 infolge des aus Figur 1 b ersichtlichen Beschnitts der Bordkantenzierleiste weggefallen ist. Der beschnittene und damit im Endabschnitt weggefallene obere Profilschenkel 11 ist in Figur 1a mit gestrichelter Linie zeichnerisch angedeutet. Wegen des Wegfalls dieses oberen Profilschenkels 11, der sich dem Grunde nach auch für ein Übergreifen und Arretieren des Überbrückungsbauteils an der Bordkantenzierleiste eignen würde, wird der Mittelsteg 7 erst erforderlich, da ohne den Mittelsteg 7 ansonsten keine zweiseitig auf das Überbrückungsbauteil 2 wirkende und dieses damit hinreichend an der Bordkantenzierleiste 1 sichernde Arretierung herstellbar wäre.

Figur 1b verdeutlich weiter, dass dann, wenn am stirnseitigen Ende der Bordkantenzierleiste eine durch Umlegen eines Materialbereichs 12 entstehende Abschlussfläche A gebildet werden soll, in einem Bearbeitungsbereich B der Mittelsteg 7 und der Hilfsschenkel 6 entfernt werden müssen, da sie ansonsten einem Umlegen des Materialbereichs 12 entgegenstehen würden.

Die Ausführungsform gemäß Figur 2 und Figuren 3a-3c macht ersichtlich, dass bei der dort im Querschnitt gezeigten Bordkantenzierleiste 1 auf einen Mittelsteg verzichtet ist. Auch hier ist der in einem Mittelabschnitt M der Bordkantenzierleiste 1 noch vorhandene obere Profilschenkel 11 im Endabschnitt E weggefallen, der in Figur 2 zeichnerisch durch eine gestrichelte Linie angedeutet ist.

Statt des Mittelstegs weist das in Figur 2 dargestellte Querschnittsprofil der Bordkantenzierleiste 1 einen Befestigungsschenkel 13 auf, der an seinem dem Basisschenkel 3 abgewandten Ende eine Verdickung 14 ausbildet, die von einer am Überbrückungsbauteil 2 ausgebildeten Rastnut 15 oberseitig und unterseitig rastend umgriffen wird. Die Verdickung - es könnte sich auch um eine Abknickung oder ein auf sonstige Weise ausgebildetes, einen Hinterschnitt ausbildendes Rastglied handeln - bildet einen in einer Hauptwirkrichtung W der Verrastung (yz-Richtung bezogen auf das Kraftfahrzeug und quer zur Längserstreckungsrichtung der Bordkantenzierleiste) wirkenden Hinterschnitt und stellt so ein von dem Überbrückungsbauteil umgreifbares Rastglied dar.

Der Befestigungsschenkel 13 erstreckt sich von der unteren Sichtkante 4 ausgehend nach innen und bildet mit dem Basisschenkel einen spitzen Winkel α. Die den Befestigungsschenkel 13 umgreifende Rastnut 15 weist dabei einen oberen Nutenschenkel 16 und einen unteren Nutenschenkel 17 auf, wobei der untere Nutenschenkel den oberen Nutenschenkel in der Hauptwirkrichtung W der Rastverbindung gesehen deutlich überragt bzw. gegenüber diesem deutlich hervorsteht. Der untere Nutentschenkel ist also gegenüber dem oberen Nutenschenkel ausgehend vom Nutgrund länger.

Betrachtet man die Rastnut 15, so ist ersichtlich, dass obere Nutenschenkel 16 die Verdickung 14 mit einer Rastnase 18, die eine lokale Einengung der Rastnut 15 bildet, übergreift. Der untere Nutenschenkel dient dabei als Gegenlager, das einem Wegschwenken des oberen Bereichs des Überbrückungsbauteils von der Bordkantenzierleiste entgegenwirkt. Im Bereich des Nutgrunds weist die Rastnut eine an das am Befestigungsschenkel angeordnete Rastglied angepasste Aufweitung zur Aufnahme des sich am Befestigungsschenkel befindlichen Rastglieds auf, insbesondere einer am Befestigungsschenkel angeordneten Verdickung oder Abknickung.

Es hat sich gezeigt, dass es durch diese Ausgestaltung möglich ist, die Bordkantenzierleiste ohne den in Figur 1a und Figur 1b noch erforderlichen Mittelsteg 7 herzustellen und das Überbrückungsbauteil 2 trotzdem sicher an der Bordkantenzierleiste 1 zu verrasten. Der Befestigungsschenkel 13 im Bereich des beschnittenen Endabschnitts E der Bordkantenzierleiste 1 bildet dabei den einzigen der Befestigung des Überbrückungsbauteils 2 dienenden Abschnitt des Querschnittsprofils der Bordkantenzierleiste. Die Fixierung des Überbrückungsbauteils 2 an der Bordkantenzierleiste 1 erfolgt nur an dem einen Befestigungsschenkel 13. Das Überbrückungsbauteil ist somit ausschließlich über die von der Rastnut 15 und dem Befestigungsschenkel 13 gebildete Rastverbindung an der Bordkantenzierleiste 1 gehalten.

Figur 3a, Figur 3b und Figur 3c verdeutlichen in anschaulicher Weise anhand verschiedener perspektivischer Ansichten die Ausgestaltung von Überbrückungsbauteil 2 und Bordkantenzierleiste 1 und verdeutlichen ferner den im Endabschnitt E vorgenommenen Beschnitt des oberen Randbereiches der Bordkantenzierleiste, durch den der obere Profilschenkel 11, der im Mittelabschnitt M noch vorhanden ist, in diesem Bereich wegfällt.

Auf der der Innenseite der Bordkantenzierleiste zugewandten Seite des Überbrückungsbauteils sind zwei Rastnuten 15 vorgesehen. Zwei Vorsprünge, die gegenüber der der Innenseite der Bordkantenzierleiste zugewandten Fläche des Überbrückungsbauteils hervorstehen, bilden dabei die oberen Nutenschenkel 16 der Rastnuten.

Der in Figur 1 b gezeigte Bearbeitungsbereich B muss bei der in Figur 2 und in Figuren 3a-3c gezeigten Ausführungsform trotz des Vorsehens einer durch Umlegen eines Materialbereichs 12 entstehenden Abschlussfläche A der Bordkantenzierleiste nicht bearbeitet werden.

Bei dem Überbrückungsbauteil handelt es sich bevorzugt um ein Spritzgussteil aus einem Kunststoff. Bei der Bordkantenzierleiste handelt es sich bevorzugt um eine Metall-Strangpressprofil, insbesondere aus Aluminium.

### Bezugszeichenliste

- 1: Bordkantenzierleiste
- 2: Überbrückungsbauteil
- 3: Basisschenkel
- 4: untere Sichtkante
- 5: Zierfläche
- 6: Hilfsschenkel
- 7: Mittelsteg
- 8: Rastvorsprung
- 9: Rastnase
- 10: Auflager
- 11: oberer Profilschenkel
- 12: umgelegter Materialbereich
- 13: Befestigungsschenkel
- 14: Verdickung
- 15: Rastnut
- 16: oberer Nutenschenkel
- 17: unterer Nutenschenkel
- 18: Rastnase
- E: Endabschnitt
- M: Mittelabschnitt
- A: Abschlussfläche
- B: Bearbeitungsbereich
- W: Hauptwirkrichtung

## Patentansprüche

1. Bordkantenzierleiste (1) zur Anbringung an die Bordkante einer Fahrzeugtür eines Personenkraftwagens, wobei
- die Bordkantenzierleiste (1) in einem Endabschnitt E, an dem bei bestimmungsgemäßer Anordnung der Bordkantenzierleiste (1) am Kraftfahrzeug ein Bauteilübergang zu einem angrenzenden Leistenbauteil realisiert ist, zur Annäherung an die Kontur des angrenzenden Leistenbauteils beschnitten ist,
- die Bordkantenzierleiste (1) im Endabschnitt E ein Querschnittsprofil mit einem Basisschenkel (3) aufweist, der bei bestimmungsgemäßer Anordnung der Borkantenzierleiste (1) am Fahrzeug eine äußere Zierfläche (5) bildet,
- ausgehend vom Basisschenkel (3) ein bei bestimmungsgemäßer Anordnung der Bordkantenzierleiste am Kraftfahrzeug ein nach innen weisender Befestigungsschenkel (13) zur Fixierung eines Überbrückungsbauteils (2) an der Bordkantenzierleiste (1) vorgesehen ist,
**dadurch gekennzeichnet, dass** der Befestigungsschenkel (13) der einzige der Befestigung des Überbrückungsbauteils (2) dienende Abschnitt des Querschnittsprofils der Bordkantenzierleiste (1) ist.

2. Bordkantenzierleiste nach Anspruch 1, **dadurch gekennzeichnet, dass** auf einen sich vom Basisschenkel (3) einwärts erstreckenden Mittelsteg (7) verzichtet ist.

3. Bordkantenzierleiste nach einem der beiden vorhergehenden Ansprüche, **dadurch gekennzeichnet, dass** sich der Befestigungsschenkel (13) von einer unteren Sichtkante (4) der Bordkantenzierleiste ausgehend nach innen erstreckt.

4. Bordkantenzierleiste nach einem der vorhergehenden Ansprüche, **dadurch gekennzeichnet, dass** der Befestigungsschenkel (13) mit dem Basisschenkel (3) einen Winkel α kleiner 90°, bevorzugt einen Winkel α kleiner 45°, weiter bevorzugt einen Winkel α kleiner 30° einschließt.

5. Bordkantenzierleiste nach einem der vorhergehenden Ansprüche, **dadurch gekennzeichnet, dass** der Befestigungsschenkel (13) im Bereich seines vom Basisschenkel (3) wegweisenden Endes einen Hinterschnitt ausbildet, um einen quer zur Längserstreckungsrichtung der Bordkantenzierleiste wirksames und von dem Überbrückungsbauteil (2) umgreifbares Rastglied (14) auszubilden.

6. Bordkantenzierleiste nach dem vorhergehenden Anspruch, **dadurch gekennzeichnet, dass** der Hinterschnitt von einer Verdickung (14), einer Abknickung, einer Vertiefung oder einer Rastnase gebildet ist.

7. Bordkantenzierleiste nach einem der vorhergehenden Ansprüche, **dadurch gekennzeichnet, dass** die Bordkantenzierleiste (1) einen Mittelabschnitt M und an einem Ende oder an beiden Enden einen beschnittenen Endabschnitt E aufweist, wobei die Bordkantenzierleiste (1) im Mittelabschnitt M ein C-förmiges Querschnittsprofil mit einem sich von einer oberen Sichtkante nach innen abgewinkelten oberen Profilschenkel (11) aufweist und der obere Profilschenkel (11) im Bereich des Endabschnitts infolge dessen Beschnitts weggefallen ist.

8. Bordkantenzierleiste nach einem der vorhergehenden Ansprüche, **dadurch gekennzeichnet, dass** ein Materialbereich (12) der Borkantenzierleiste (1) am Ende der Bordkantenzierleiste (1) zur Erzeugung einer stirnseitigen Abschlussfläche A umgelegt ist.

9. Überbrückungsteil (2) zur insbesondere optischen Überbrückung eines sich bei bestimmungsgemäßer Anordnung an einem Kraftfahrzeug zwischen einer Bordkantenzierleiste (1) und eines daran angrenzenden Leistenbauteils bildenden Bauteilübergangs, wobei das Überbrückungsbauteil (2) einen Querschnitt mit wenigstens einem Rastmittel aufweist, das eingerichtet ist, bei bestimmungsgemäßer Anordnung des Überbrückungsbauteils (2) an der Bordkantenzierleiste (1) ein an einem Befestigungsschenkel (13) der Bordkantenzierleiste befindlichen Hinterschnitt zu hintergreifen,
**dadurch gekennzeichnet, dass** das Rastmittel von einer Rastnut (15) gebildet ist, die den mit dem Hinterschnitt versehenen Befestigungsschenkel (13) oberseitig und unterseitig verrastend zu umgreifen vermag.

10. Überbrückungsteil nach dem vorhergehenden Anspruch, **dadurch gekennzeichnet, dass** die Rastnut (15) eine Aufweitung zur Aufnahme eines sich am Befestigungsschenkel (13) befindlichen Rastglieds (14) aufweist.

11. Überbrückungsteil nach einem der beiden vorhergehenden Ansprüche, **dadurch gekennzeichnet, dass** die Rastnut (15) einen oberen Nutenschenkel (16) und einen unteren Nutenschenkel (17) aufweist und wenigstens einer der beiden Nutenschenkel (16, 17) eine den Hinterschnitt des Befestigungsschenkels (13) übergreifende Einengung ausbildet.

12. Überbrückungsteil nach einem der drei vorhergehenden Ansprüche, **dadurch gekennzeichnet, dass** die Rastnut (15) einen oberen Nutenschenkel (16) und einen unteren Nutenschenkel (17) aufweist und einer der beiden Nutenschenkel (16, 17) als Gegenlager für den den Hinterschnitt des Befestigungsschenkels (13) übergreifenden anderen Nutenschenkel ausgebildet ist.

13. Überbrückungsteil nach einem der beiden vorhergehenden Ansprüche, **dadurch gekennzeichnet, dass** ein Nutenschenkel den anderen Nutenschenkel in einer Hauptwirkrichtung W der Verrastung gesehen in der Länge überragt.

14. Überbrückungsteil nach einem der fünf vorhergehenden Ansprüche, **dadurch gekennzeichnet, dass** das Überbrückungsbauteil (2) derart ausgebildet ist, dass es quer zur Längserstreckung der Bordkantenzierleiste (1) auf diese aufgesetzt wird.

15. System aus einer Bordkantenzierleiste gemäß Oberbegriff des Anspruchs 1 und einem Überbrückungsteil gemäß Oberbegriff des Anspruchs 9 oder System aus einer Bordkantenzierleiste nach einem der Ansprüche 1 bis 8 und einem Überbrückungsteil nach einem der Ansprüche 9 bis 14, **dadurch gekennzeichnet, dass** die Fixierung des Überbrückungsbauteils (2) an der Bordkantenzierleiste (1) nur an dem Befestigungsschenkel (13) erfolgt.
